Europäisches Patentamt

European Patent Office

Office européen des brevets

(19)

(11) **EP 1 335 320 A2**

(12) **EUROPEAN PATENT APPLICATION**

(43) Date of publication:
**13.08.2003 Bulletin 2003/33**

(51) Int Cl.⁷: **G06N 3/08**

(21) Application number: **03250620.6**

(22) Date of filing: **31.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **31.01.2002 KR 2002005749**

(71) Applicant: **SAMSUNG ELECTRONICS CO., LTD.**
**Suwon-City, Kyungki-do (KR)**

(72) Inventors:
• **Chang, Seung-gi**
  **Seocho-gu, Seoul (KR)**
• **Zhang, Zhi-ming**
  **Paldal-gu, Suwon-city, Gyunggi-do (KR)**

(74) Representative: **Geary, Stuart Lloyd et al**
**Venner, Shipley & Co.,**
**20 Little Britain**
**London EC1A 7DH (GB)**

(54) **Configuring learning petri nets**

(57)     A self organizing learning Petri net modeling a system using a large number of training samples performs consecutive trainings using the training samples with a pre-known output value with respect to an input, and when following training samples are applied to a first system parameter created by pre-tested training samples, begins to create the system according to a method of creating a distinct system parameter when an error between an output value of the system and a pre-known output value of the following training samples is larger than a critical value, and adding the new system parameter to a pre-organized first system parameter. A final system parameter is determined by consecutively learning the large number of the training samples in an organized system again. Through this self organizing process, system modeling can be performed more accurately, and a learning process much faster than a back-propagation learning process using a unified CPN and LPN in a general neural network can be achieved.

FIG.3

EP 1 335 320 A2

Printed by Jouve, 75001 PARIS (FR)

**Description**

The present invention relates to a method of configuring a Learning Petri Net (LPN), the method comprising training the LPN using training data.

Recently, soft computing models, such as neural networks, wavelet networks, fuzzy systems, Bayesian classifiers and fuzzy partitions have become widely used in various fields. Although developed from different starting points, these soft computing models have come to be recognized as similar and interconnected. For example, an RBF (Radial Basis Function Network) and a class of fuzzy systems are regarded as functionally identical. The WRBF (Weighted Radial Basis Function) network unifies neural networks, a wavelet networks, fuzzy systems and other established methods, such as linear controllers and fuzzy and hard clusters. The WRBF network was disclosed in Leonardo M. Reyneri, "Unification of neural and wavelet networks and fuzzy systems," IEEE trans. on neural networks, Vol. 10, No. 4, pp. 801-814, 1999. The WRBF network, suggested by Leonardo M. Reyneri, has the ability to merge neural networks, wavelet networks, fuzzy systems and other established methods within the same system together with unified controlled and uncontrolled training algorithms.

Carl Petri of Germany suggested Petri nets capable of modelling various conditions in 1960. A Petri net includes two types of nodes, places and transitions, which are interconnected by arcs. Transitions generate output signals in response to input signals and places, on the other hand, store particular input and output signals. A place is marked with a token and acquires a meaning through a location mark and a firing rule. The firing rule is that transfer is possible only when all input places of the transition have at least one token and that the transition can be fired when the transfer becomes possible. When the transition is fired, each input place of the transition loses the token, and each output place of the transition gains another token. In other words, the tokens in the Petri net are transferred through firing transitions. This means that tokens can be transferred via a particular route instead of all network routes and the Petri net has a function distribution capability.

However, until recently, the Petri net has been regarded merely as a graphical and mathematical modelling tool applicable to a domain completely different from soft computing. This is because the Petri net is rarely found applied to modelling and controlling non-linear dynamic systems and has no learning ability, unlike a neural network.

In order to solve the above problem, a new style Petri net having a learning ability, called a learning Petri net (LPN), has been disclosed in Kotaro Hirasawa, et al., "Learning Petri network and its application to nonlinear system control," IEEE Trans. Syst. Man Cyber, Vol. 28, No. 6, pp. 781-789, 1998.

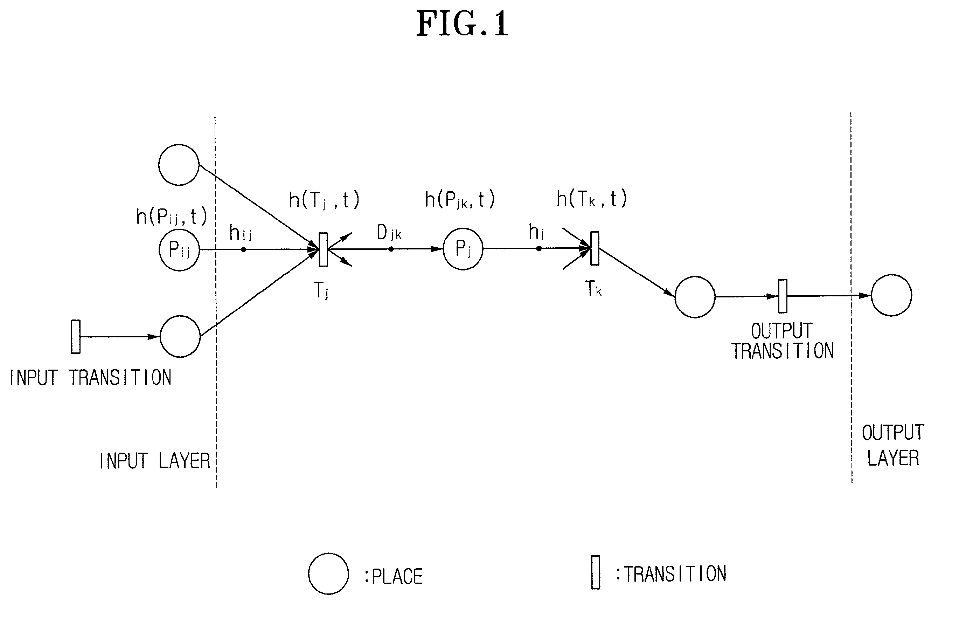

Figure 1 is a diagram showing the basic structure of a conventional LPN.

Referring to Figure 1, each transition, excluding input transitions, in Figure 1 has a predetermined number of input and output places. For simplicity, transitions do not share input or output places. Although Figure 1 shows a limited number of transitions and places, in practice more transitions and places would be connected with each other in rows or series in a large variety of forms.

In order for the LPN to have the characteristics of a dynamic system, firing signals are introduced to the LPN. A firing signal is processed in a firing transition and propagates across the network through token transfer. When the firing signal is assigned in the input transition with the value of an input signal and the output signal is obtained as the firing signal of an output transition, the LPN can be used to realize an input-output mapping. Input arcs connecting the input places with a transition have weights, $h_{ij}$. The weights, which are constrained to be positive integers in a conventional Petri net, are extended to be continuously adjustable in order to provide the learning ability. Output arcs connecting the transitions with the output places have time delays, $D_{jk}$, which are zero or a positive integer at a sampling time.

In the LPN, the input-output mapping is realized by the firing signal propagating from the input transition to the output transition through token transfer. The LPN and the Petri net are distinct in the way that the tokens transfer the firing signals in the LPN. The tokens in the LPN are generated in transitions and provided with a firing signal of the transition until the tokens are extinguished in the place. The value of the firing signal of the transition is defined by Equation 1.

$$h(T_j, t) = f(\varsigma_j)$$
$$\varsigma_j = \sum_i h(P_{ij}, t) h_{ij} + \beta_j \qquad (1)$$

where $h_{ij}$ is a firing weight on an arc between a place $P_{ij}$ and a transition $T_j$, i is an index for places connected to the input side of the transition $T_j$, $\beta_j$ is a threshold value for the transition $T_j$, $f(\varsigma_j)$ is a nonlinear function, and $h(P_{ij}, t)$ is the value of the firing signal of the place at time $t$, defined by the sum of the values of the firing signals transferred by tokens in the place $P_{ij}$. When the place is empty, $h(P_{ij}, t)$ is given the value of zero.

Although the LPN has the ability to learn and realize a neural network, there is a problem in that the output value may be more or less inaccurate because a number of connections of all transitions and places between an input layer and an output layer are predetermined by the experiences of a user in the conventional LPN. That is, in a real application of an LPN, a problem may occur since the whole system needs to be modified in relation to the degree of error of an output value, as the accuracy of the output value is lacking when a structure suitable for the application does not exist, although an accurate output may be expected when it does.

A method according to the present invention is characterised by performing an initial self-organising process in which parameters are varied and units added in dependence on the response of the LPN to input signals.

Preferably, the LPN has a fuzzy rules matching layer. More preferably, the self-organising process comprises:

identifying a winner unit in the fuzzy rules matching layer with reference to an input signal;
comparing values corresponding to the winner unit with a reference; and
modifying the winner unit or creating a new unit in dependence on the result of said comparison.

Further preferred and option features of the present invention are set forth in claims 4 to 27 appended hereto.

An embodiment of the present invention will now be described, by way of example, with reference to Figures 2 to 4 of the accompanying drawings, in which:

Figure 1 is a diagram of a conventional basic LPN structure;
Figure 2 is a diagram of a 2-input self organizing learning Petri net (SOLPN) structure according to the present invention;
Figure 3 is a flowchart illustrating the self organizing process of the SOLPN shown in Figure 2; and
Figure 4 is a flowchart illustrating the learning process of the SOLPN shown in Figure 2.

The present description refers to certain papers, listed at the end. The papers are identified in the present description by numbers in round brackets ( ).

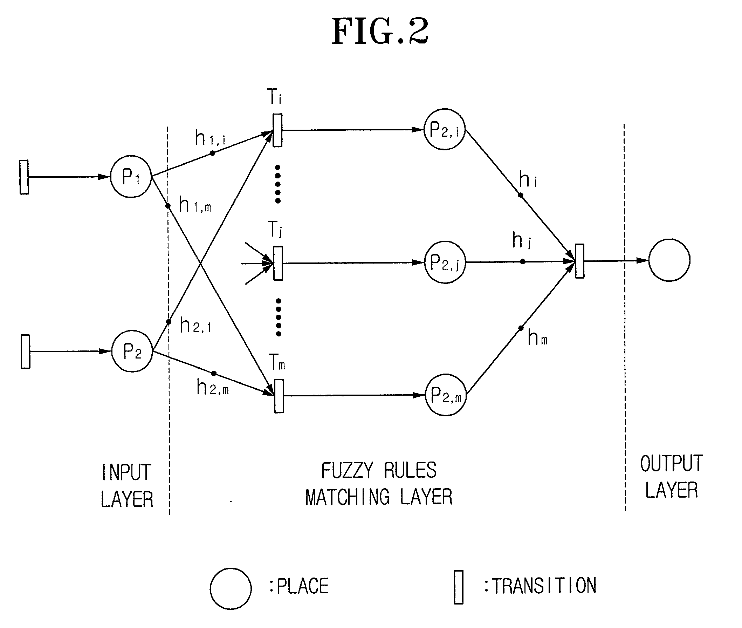

Referring to Figure 2, a SOLPN has an input layer, a fuzzy rules matching layer and an output layer.

The input layer has two input transitions and two input places.

The fuzzy rules matching layer may have a number of transitions and a number of places. In the fuzzy rules matching layer, signals propagate based according to Equation 2:

$$h(T_j,t) = \exp\left( -\frac{\sum_{i=1}^{n_1}(h(P_{i,j},t) - h_{ij})^2}{\sigma_j^2} \right) \qquad (2)$$

where $h_{ij}$ is a firing weight on an arc between a place $P_{ij}$ and a transition $T_j$, $i$ is an index of identifying a place connected to the input side of the transition $T_j$, and $h(P_{ij},t)$ is the value of the firing signal of the place at time $t$, defined by the sum of the values of the firing signals transferred by tokens in the place. When the place is empty, $h(P_{ij},t)$ is given the value of zero. exp() is the exponential function. In practical application, $h(T_j,t)$ can be any kind of suitable nonlinear function, and it is not limited just to exponential functions.

The output layer has a single transition and a single place to provide a single output. In the output layer, signals propagate according Equation 3.

$$h(T_j,t) = \frac{\sum_{i=1}^{n_1} h(P_{i,j},t) \cdot h_{ij}}{\sum_{i=1}^{n_1} h(P_{i,j},t)} \qquad (3)$$

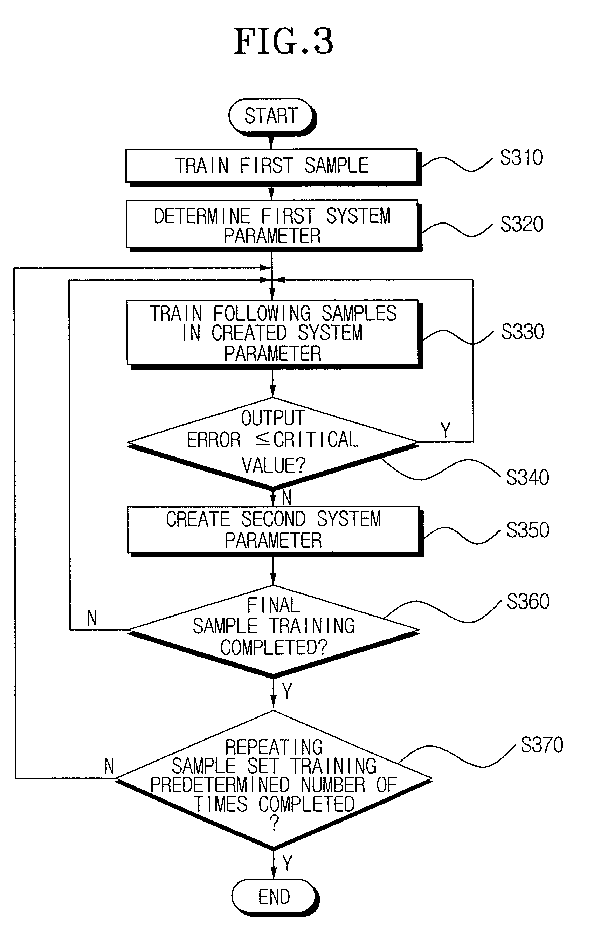

Referring to Figure 3, in order to establish a system, first of all, a first training sample of a sample set, of which an input value and an output value are already known, is used for training in operation S310. After establishing a first system parameter using the first training sample in operation S320, a second training sample of the sample set is used for training the system configured by the first system parameter in operation S330. And then the error between the output value of the system, according to the second training sample, and the known target output value for the second training sample is produced and compared with a critical value.

If the error is smaller than the critical value, a third training sample of the sample set is used for training in the system. On the other hand, if the error is bigger than the critical value, a second system parameter is produced according to the second training sample in operation S350.

For the following training samples consecutively input to the system, a new system parameter is produced according to the errors between the actual output values and the corresponding known target values. Finally, after detecting a training completion state for a last sample in operation S360, the self organizing process is completed by repeating the consecutive training using the training samples a predetermined number of times in operation S370. The following training samples are applied to the new system parameter created by a combination of a pre-system parameter established by a pre-tested training sample, a following system parameter, and a previous system parameter.

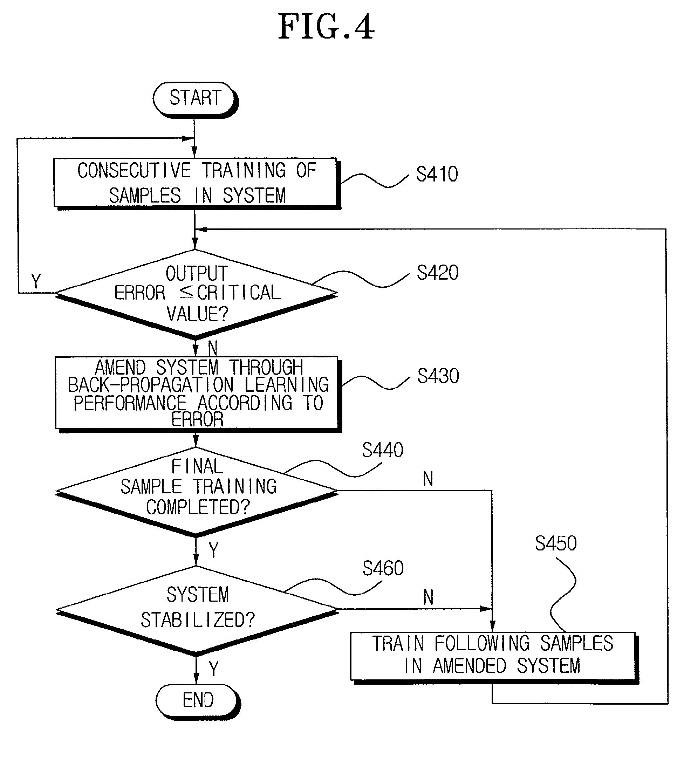

Referring to Figure 4, in the learning process (i.e. an optimization phase), following the above-described self-organising phase, the first sample used in the system self organizing process shown in Figure 3 is used for training in operation S410. The error between the actual output value and the known target output value for the known training sample is obtained and compared to the critical value in operation S420. If the error is smaller than the critical value, the second sample is used for training. On the other hand, if the error is bigger than the critical value, the system is amended by a back propagation learning algorithm in operation S430. The following samples are used for training the amended system in operation S440. Through the above described processes, completion of training using a last sample is detected in operation S440, and training using the sample sets is consecutively repeated until the system is stabilized in operation S450. When the system is stabilized for the training samples, the learning from the training samples is ended in operation S460.

The above self organizing and learning processes will now be described with reference to the papers listed at the end of the present description.

The present invention utilizes a self-organizing counter propagation network (SOCPN) equation shown in reference paper (15) in order to establish a system. In a simple case, an improved unsupervised SOCPN (IUSOCPN) employing flexible fuzzy division is used for sampling information from training data shown in reference papers (4) and (15). The IUSOCPN is an example of a system self organizing phase.

A system self-organizing process based on the above IUSOCPN will now be described.

An initial network configuration is established and then the self-organising begins.

At first, as a first operation, a relative winner unit, *J*, is determined. The winner unit is that having the smallest distance, **D**, between its place and transition in the fuzzy rules matching layer and the current input, $\bar{x}$, as determined by Equation 4:

$$D(\overline{H}^{J}(t),\bar{x}) = \min_{j=1,\ldots,M} d^{j}(\overline{H}(t),\bar{x}) \qquad (4)$$

where $\overline{H}^{j}(t) = (h_{1j}(t),\cdots,h_{Qj}(t))$, *Q* is a dimension of the current input $\bar{x}$, and $d(\cdot,\cdot)$ is a metric distance.

In equation 4, $d(\cdot,\cdot)$ is the Euclidean distance obtained from Equation 5:

$$d_{Euc}^{j}(\bar{x},\overline{H}^{J}) = \left[\sum_{i=1}^{Q}(h_{ij}-x_i)^2\right]^{1/2} \qquad (5)$$

In a second phase, it is determined whether *J* is an absolute winner using the following rules:

1. If $D(\overline{H}^{J}(t),\bar{x}) \leq \delta$, then the unit *J* is an absolute winner.
2. If $D(\overline{H}^{J}(t),\bar{x}) > \delta$, then create a new unit. $\delta$ is a predefined system parameter.

In a third phase, if *J* is an absolute winner according to the above rules, the following parameter modifications are performed:

$$\begin{cases} n^{J}(t) = n^{J}(t-1)+1 \qquad \alpha^{J}(t) = \dfrac{1}{n^{J}(t)} \\ \delta^{J} = \delta^{J} + \eta \\ \overline{H}^{J}(t) = \overline{H}^{J}(t-1) + \alpha^{J}(t)[\overline{x} - \overline{H}^{J}(t-1)] \\ p(t) = P(t-1) \\ z^{J} = 1 \end{cases}$$

If the new unit is created, it is created with the following parameters:

$$\begin{cases} p(t) = P(t-1) \\ \overline{H}^{P}(t) = \overline{x} \\ \delta^{P} = \delta \\ n^{P}(t) = 1 \\ z^{P} = 1 \end{cases}$$

$0 < a^{J}(t) < 1$ is a gain sequence decreasing with time, and $\eta$ is a constant expansion rate.

Once the fuzzy rules matching layer has stabilized by repetitions of the above phases, $\overline{M}^{J}$ becomes fixed, and training of the output layer begins. In the training of the output layer, a desired output $y^{s}$ for each fixed weight vector by adjusting a connection weight $h_{j}$ from a $J$ th fuzzy rule unit to an output unit. An update formula for the output layer is given by Equation 8:

$$h_{j}(t) = h_{j}(t-1) + \beta[y - h_{j}(t-1)]z^{j} \qquad (6)$$

An update rate $\beta$ is a constant within a range between 0 and 1, and $y$ is a corresponding pre-known output.

One thing to note is that all $K$ ($K > 1$) transitions will be fired in the normal performance phase and the optimization phase of the SOLPN, whereas only one transition is fired in the self-organizing process. It means that the number of firing transitions is limited to one in the self-organizing phase and $K$ transitions will be fired in the normal learning performance or the optimization phase. In other words, the number of the firing transitions is different in each phase. In addition, fixing the number of the firing transitions as one makes calculation in the self-organizing process convenient.

The general structure of the fuzzy system, given by the number of rules, is determined and the initial parameters of the system are established by the self-organizing process. However, the system can be regarded as a rather rough model and is not sufficient for accurate modelling. Therefore, a unified learning algorithm for a weighted radial basis function (WRBF) network, based on a gradient descendent method is used to optimise the structure of the fuzzy system. A normal supervised gradient descendent method for a WRBF network is shown in reference paper (17).

An error function is defined by Equation 9:

$$E(\overline{X}; \underline{C}, \underline{W}, \overline{\Theta}) = \frac{1}{2}\sum_{j}(y_{j} - t_{j})^{2} \qquad (7)$$

where $y_{j}$ and $t_{j}$ are a response of a J th neuron to the input $\overline{x}$ and a corresponding target value taken from the training sample set, respectively. Generalized learning rules for a WRBF neuron are defined by equations 10 to 14:

$$\delta_j = \frac{\partial E}{\partial y_i} = (y_j - t_j) \tag{8}$$

$$\Delta w_{ji} = -\eta_w \cdot \delta_j \cdot \frac{\partial \quad E}{\partial \quad w_{ji}}$$
$$= -\eta_w \cdot \delta_j \cdot F'(z_j) \cdot \left[ \frac{z_j}{n(z_j)^n} \right] \tag{9}$$

$$\Delta \Theta_j = -\eta_\Theta \cdot \delta_j \cdot F'(z_j) \cdot \left[ \frac{z_j}{n(z_j)^n} \right] \tag{10}$$

$$\Delta c_{ji} = (\eta_c \cdot \delta_j \cdot F(z_j) \cdot \left[ \frac{z_j}{n(z_j)^n} \right] \cdot w_{ji}$$
$$\cdot [n \cdot D_{n-1}(x_i - c_{ji}) \cdot \mathrm{sgn}(x_i - c_{ji}) \cdot x_i - c_{ji})] \tag{11}$$

$$\delta x_i = \sum_j \delta_j \cdot F'(z_j) \cdot \left[ \frac{z_j}{n(z_j)^n} \right] \cdot w_{ji}$$
$$\cdot [n \cdot D_{n-1}(x_i - c_{ji}) \cdot \mathrm{sgn}(x_i - c_{ji}) \tag{12}$$

where $\eta_w$, $\eta_c$, and $\eta_\Theta$ are the three learning coefficients and $z_j$ is the argument of an active function, $F(\cdot)$. $\delta_j$ is a back-propagated learning error at an input normalization layer.

In the above system optimization phases, the present invention has two differences from the WRBF learning algorithm. A first difference is that not all parameters are optimized across the whole network. This is because only the number $K$ of the transitions is fired according to LPN firing rules. The first difference enables the process time in the learning phase to be reduced. A second difference is that the gradient descendent method is basically slow. However, the parameters have been "intelligently" initialized in the self organizing process. In order to further optimize the result of the system, another method described in reference paper (12) is used. The method described in the reference paper (12) utilizes the concept of decreasing errors and Equation 15:

$$f_{m+1} = \theta f_m + (1-\theta) d_m \tag{13}$$

where $d_m$ is a partial derivative of an error in relation to a weight at an epoch $m$, and $\theta$ is a learning constant.
Equation 16 governs the changing value $e$:

$$e_m = \begin{cases} e_{m-1} + k & d_m f_m \rangle 0 \\ e_{m-1} \times \varnothing & d_m f_m \leq 0 \end{cases} \tag{14}$$

where $k$ and $\phi$ are learning constants.
When $e$ is determined, an actual weight change $c_m$ is amended according to Equation 17:

# EP 1 335 320 A2

$$c_m = -e_m d_m \qquad (15)$$

Bibliography and the reference papers are as follows.

(1) J. E. Box, G. M. Jenkins, *Time series analysis: Forecasting and control,* Holden Day Press, San Francisco, 1970.

(2) Ching-Chang Wong, Shyang-Ming Her, "A self-generating method for fuzzy system design," *Fuzzy Sets Syst.*, Vol. 103, pp. 13-15, 1999.

(3) Yin Wang, Gang Rong, "A self-organizing neural-network-based fuzzy system," *Fuzzy Stes Syst.*, Vol. 103, pp. 1-11, 1999.

(4) Junhong Nie, "Constructing fuzzy model by self-organizing counterpropagation network," *IEEE trans. Syst. Man Cyber.*, Vol. 25, No.6, pp.963-970, 1995.

(5) R. M. Tong, "The evaluation of fuzzy model derived from experimental date," *Fuzy Sets Syst.*, Vol. 4, pp. 1-12, 1980.

(6) W. Pedrycz, "An identification algorithm in fuzzy relational systems," *Fuzzy Sets Syst.*, Vol. 4, pp. 153-167, 1984.

(7) C. W. Wu, Y. Z. Lu, "Fuzzy model identification and self-learning for dynamic systems," *IEEE Trans. Syst. Man Cyber.*, Vol. 17, pp. 683-689, 1987.

(8) M. Sugeno, T. Ysdukawa, "A fuzzy logic-based approach to qualitative modeling," *IEEE Trans. Fuzzy Syst.* Vol. 1, pp. 7-31, 1993.

(9) S. Horikawa, T. Furuhashi, Y. Uchikawa, "A fuzzy modeling using fuzzy neural networks with the back-propagating algorithms," *IEEE Trans. Neural Networks,* Vol. 3, No. 5, pp. 801-806, 1992.

(10) C. T. Lin, C. S. G. Lee, "Neural-network-based fuzzy logic control and decision system," *IEEE Trans. Comput.*, Vol. 40, No. 12, pp. 1320-1336, 1991.

(11) Teuvo Kohonen, et al., "Engineering applications of the self-organizing map," *Proc. Of IEEE*, Vol. 84, No. 10, pp. 1358-1383, 1996.

(12) Murray Smith, *Neural networks for statistical modeling*, Van Nostrand Reinhold, New York, 1993.

(13) Petri Vuorimaa, "Fuzzy self-organizing map," *Fuzzy Sets Syst.*, Vol. 103, pp. 223-231, 1994.

(14) R. Hecht-Neilsen, "Counterpropagation network," *Applied Optics*, Vol. 26, pp. 4979-4984, 1987.

(15) Zhiming Zhang, et al., "An improved self-organizing CPN-based fuzzy system with adaptive back propagation algorithm," *Fuzzy sets and systems*, to be published.

(16) YanQing Zhang, et al., "Compensatory neurofuzzy systems with fast learning algorithms," *IEEE trans. neural networks,* Vol. 9, No. 1, 1998.

(17) Leonardo M. Reyneri, "Unification of neural and wavelet networks and fuzzy systems," *IEEE trans. on neural networks*", Vol. 10, No. 4, pp. 801-814, 1999.

(18) Kotaro Hirasawa, et al., "Learning Petri network and its application to nonlinear system control," *IEEE Trans. Syst. Man Cyber.*, Vol. 28, No. 6, pp. 781-789, 1998.

(19) J. S. R. Jang and C. T. Sun, "Functional equivalence between radial basis function networks and fuzzy inference systems," *IEEE trans. on neural networks*, Vol. 4, pp. 156-159, 1993.

(20) L. M. Reyneri, "Weighted radial basis functions for improved pattern recognition and signal processing," *Neural processing letter,* Vol. 2, No. 3, pp. 2-6, 1995.

(21) L. M. Reyneri, "Unification of neural and fuzzy computing paradigms," *Proceedings of 1st international symposium on neuro-fuzzy systems,* AT'96, Lausanne, Switzerland, Aug, 1996.

(22) J. M. Benitez, J. L. Castro and I. Requena, "Are artificial neural network black boxes?" *IEEE trans. on neural networks,* Vol. 8, pp. 1156-1164, 1997.

(23) J. J. Buckley, Y. Hayashi, and E. Czogala, "The equivalence of neural nets and fuzzy expert systems," *Fuzzy Sets Syst.*, No. 53, pp. 129-134, 1993.

(24) K. J. Hunt, R. Haas and M. Brown, "The functional equivalence of fuzzy inference systems and spline-based networks," *Int. J. Neural sys.*, 1995.

(25) T. Murata, "Petri Nets: Properties, analysis and applications," *Proc. IEEE*, Vol. 77, No. 4, pp. 541-580, 1989.

(26) R. David and H. Alla, "Petri nets for modeling of dynamic systems-A survey," *Automatica*, Vol. 30, No. 2, pp. 175-202, 1994.

The SOLPN according to the present invention can model a system more accurately and perform learning much faster than the back-propagation learning using a unified CPN and LPN in a general neural network by enabling a system to be self-organized through training data.

**Claims**

1. A method of configuring a Learning Petri Net (LPN), the method comprising training the LPN using training data, **characterised by** performing an initial self-organising process in which parameters are varied and units added in dependence on the response of the LPN to input signals.

2. A method according to claim 1, wherein the LPN has a fuzzy rules matching layer.

3. A method according to claim 2, wherein the self-organising process comprises:

   identifying a winner unit in the fuzzy rules matching layer with reference to an input signal;
   comparing values corresponding to the winner unit with a reference; and
   modifying the winner unit or creating a new unit in dependence on the result of said comparison.

4. A method in a self organizing learning Petri net, the method comprising:

   training a number of training samples with a pre-known output value by comparing an error between an output value created by applying following training samples to a first system parameter produced by a pre-tested training sample and the pre-known output value of the following training samples, with a critical value, and by self organizing an initial system parameter according to a result of the comparing the error with the critical value; and
   determining a final system parameter through consecutive learning of the number of the training samples in a system established based on the initial system parameter.

5. The method of claim 4, wherein the self organizing of the initial system parameter comprises:

   determining the first system parameter through a first training sample among the number of the training samples;
   applying a second training sample in a first system organized through the first system parameter;
   comparing an error produced as a result of applying the second training sample to the first system and the critical value; and
   creating a second system parameter when the error is larger than the critical value.

**6.** The method of claim 5, further comprising:

applying the following training sample to the first system when the error is smaller than the critical value.

**7.** The method of claim 6, further comprising:

creating a new second system parameter when the error is larger than the critical value;
organizing a new third system parameter by adding the second system parameter to the first system parameter; and
applying a following training sample to the third system.

**8.** The method of claim 4, wherein the initial system parameter is determined by repeating consecutive training of the number of the training samples a predetermined number of times.

**9.** The method of claim 4 wherein the determining of the final system parameter comprises:

consecutively applying the number of the training samples to the system organized by the initial system parameter:

comparing each error created in each of the training samples with each basic critical value; and
amending a system parameter determined by preceding training samples when the error is larger than the critical value.

**10.** The method of claim 9, wherein the final system parameter is determined by repeating consecutive training of the training samples until the system is stabilized.

**11.** A method in a self organizing learning Petri net (SOLPN), the method comprising:

forming a first system parameter from a first training sample; applying a second training sample having a pre-known output value to a system formed by the first system parameter to generate an output;
generating an error between the output of the system according to the second training sample and the pre-known output value of the second training sample;
comparing the error with a first critical value; and
creating a second system parameter forming the system when the error is greater than the first critical value.

**12.** The method of claim 11, further comprising:

applying a third training sample having another pre-known output value to the system formed by the second system parameter to generate a second output;
generating a second error between the second output and another pre-known output value;
comparing the second error and a second critical value; and
creating a third system parameter forming the system when the error is greater than the second critical value.

**13.** The method of claim 11, further comprising:

determining whether the second training sample is a final training sample; and
applying a third training sample to the system formed by the first system parameter when the second training sample is not the final training sample.

**14.** The method of claim 13, further comprising:

completing a self organizing process when the second training sample is the final training sample.

**15.** The method of claim 11, wherein the creating of the second system parameter comprises:

amending the system to a second system formed according to a back-propagating learning process; and
applying a third training sample to the second system.

**16.** The method of claim 11, wherein the SOLPN comprises a first sample set having the first and second training samples and a second sample set having third and fourth training samples having third and fourth pre-known output values, respectively, and the method further comprises:

> determining whether the second training sample is a final training sample in the first sample set; and
> applying the third training sample to the system formed by the second system parameter when the second training sample is the final training sample in the first sample set, and the error is greater than the first critical value.

**17.** The method of claim 16, wherein the applying the third training sample comprises:

> amending the system to a second system; and
> applying the third training sample to the second system.

**18.** The method of claim 17, wherein the system comprises a first input layer, a first fuzzy rules matching layer, and a first output layer, and the second system comprises a second input layer, a second fuzzy rules matching layer, and a second output layer.

**19.** The method of claim 16, further comprising:

> generating a second error between an output of the system formed by the second system parameter and the third pre-known output value of the third training sample;
> comparing the second error with a second critical value; and
> applying the fourth training sample to the system formed by the second system parameter when the second error is not greater than the second critical value.

**20.** The method of claim 19, wherein the applying of the fourth training sample comprises:

> creating a third system parameter when the second error is greater than the second critical value; and
> applying the fourth training sample to the system formed by the third system parameter.

**21.** The method of claim 20, wherein the applying of the fourth training sample comprises:

> amending the system to a second system having a different fuzzy rules matching layer from the system; and
> applying the fourth training sample to the second system.

**22.** The method of claim 16, further comprising:

> applying the third training sample to the system formed by the first system parameter when the second training sample is the final training sample in the first sample set, and the error is not greater than the first critical value.

**23.** A method in a self organizing learning Petri net, the method comprising:

> forming a first system parameter from a first training sample;
> applying a second training sample having a pre-known output value to a first system formed by the first system parameter to generate an output, the first system having a first fuzzy rules matching layer;
> generating an error between the output of the system according to the second training sample and the pre-known output value of the second training sample;
> comparing the error with a critical value; and
> amending the first system to a second system when the error is greater than the critical value, the second system having a second fuzzy rules matching layer different from the first fuzzy rules matching layer of the first system.

**24.** The method of claim 23, wherein the amending of the first system comprises:

> creating a second system parameter when the error is greater than the critical value; and
> forming the second system according to the created second system parameter.

**25.** The method of claim 23, wherein the first fuzzy rules matching layer comprises a number of transitions and a number of places, and signals propagate based on the following Equation:

$$h(T_j,t) = \exp\left( -\frac{\sum_{i=1}^{n_1}(h(P_{i,j},t) - h_{ij})^2}{\sigma_j^2} \right)$$

where $h_{ij}$ is a firing weight on an arc between a place $P_{ij}$ and a transition $T_j$, $i$ is an index of a place connected to an input side of the transition $T_j$, and $h(P_{ij},t)$ is a value of a firing signal of the place at time $t$ defined by a sum of values of the firing signal transferred by tokens in the place. When the place is empty, $h(P_{ij},t)$ is given a value of zero. Exp() is an exponential function. In practical application, $h(T_j,t)$ can be any kind of suitable nonlinear functions, and it is not limited just to exponential function.

**26.** The method of claim 25, wherein the first system comprises an output layer having a single transition and a single place to obtain a single output, and signals propagate based on the following Equation:

$$h(T_j,t) = \frac{\sum_{i=1}^{n_1} h(P_{i,j},t) \cdot h_{ij}}{\sum_{i=1}^{n_1} h(P_{i,j},t)} .$$

**27.** The method of claim 26, wherein the first fuzzy rules matching layer comprises a minimum distance between the space and the transition based on the following equation:

$$D(\overline{H}^{\,J}(t), \overline{x}) = \min_{j=1,...,M} d^{\,j}(\overline{H}(t), \overline{x})$$

where $\overline{H}^j(t) = (h_{1j}(t), \cdots, h_{Qj}(t))$, [and] Q is [the] a dimension of a current input $\overline{x}$, and $d(\cdot,\cdot)$ is a metric distance.

# FIG.1

$h(P_{ij},t)$   $h(T_j,t)$   $h(P_{jk},t)$   $h(T_k,t)$

$P_{ij}$   $h_{ij}$   $D_{jk}$   $P_j$   $h_j$

$T_j$   $T_k$

INPUT TRANSITION

INPUT LAYER

OUTPUT TRANSITION

OUTPUT LAYER

○ :PLACE          ▯ :TRANSITION

EP 1 335 320 A2

FIG.2

# FIG.3

START

TRAIN FIRST SAMPLE — S310

DETERMINE FIRST SYSTEM PARAMETER — S320

TRAIN FOLLOWING SAMPLES IN CREATED SYSTEM PARAMETER — S330

OUTPUT ERROR ≤ CRITICAL VALUE? — S340

Y

N

CREATE SECOND SYSTEM PARAMETER — S350

FINAL SAMPLE TRAINING COMPLETED? — S360

N

Y

REPEATING SAMPLE SET TRAINING PREDETERMINED NUMBER OF TIMES COMPLETED ? — S370

N

Y

END

# FIG.4

```
                    ┌─────────┐
                    │  START  │
                    └────┬────┘
                         │
                         ▼
        ┌──────────────────────────────┐
   ┌───►│  CONSECUTIVE TRAINING OF     │────── S410
   │    │     SAMPLES IN SYSTEM        │
   │    └──────────────┬───────────────┘
   │                   │
   │                   ▼
   │  Y      ╱◄────────────────►╲
   └────────◄      OUTPUT        ►────── S420
            ╲ ERROR ≤ CRITICAL  ╱
             ╲     VALUE?      ╱
              ╲───────┬───────╱
                      │ N
                      ▼
        ┌──────────────────────────────┐
        │   AMEND SYSTEM THROUGH       │
        │ BACK-PROPAGATION LEARNING    │────── S430
        │ PERFORMANCE ACCORDING TO     │
        │          ERROR               │
        └──────────────┬───────────────┘
                       │
                       ▼
              ╱◄────────────────►╲       N
             ◄      FINAL         ►──────────── S440
             ╲ SAMPLE TRAINING   ╱
              ╲  COMPLETED?     ╱
               ╲──────┬────────╱
                      │ Y
                      ▼
              ╱◄──────────────►╲         N
             ◄    SYSTEM        ►─────────── S460
             ╲  STABILIZED?    ╱
              ╲──────┬────────╱
                     │ Y
                     ▼
                ┌────────┐
                │  END   │
                └────────┘
```

S450  — TRAIN FOLLOWING SAMPLES IN AMENDED SYSTEM